# DEMANDE DE BREVET EUROPEEN

(11) **EP 3 726 802 A1**
(43) Date de publication de la demande: **21.10.2020**
(21) Numéro de dépôt: 20169556.6
(22) Date de dépôt: 15.04.2020
(51) Int. Cl.: H04L 29/06, H04L 12/26, H04W 4/70, H04L 29/08

(54) **DISPOSITIF ÉLECTRONIQUE DE TRANSMISSION D'UN FLUX VIDÉO, VÉHICULE, SYSTÈME ÉLECTRONIQUE DE SURVEILLANCE ET PROCÉDÉ ASSOCIÉ**

(30) Priorité: 16.04.2019 FR 1904058
(71) Demandeur: Transdev Group, 92130 Issy les Moulineaux (FR); Sdel Infi, 91170 Viry-Chatillon (FR)
(72) Inventeur: BEAUVILLAIN, Alexis, 91300 MASSY (FR); THAMIÉ, Philippe, 75010 PARIS (FR)
(74) Mandataire: Lavoix

(57) **Abrégé**

L'invention concerne un dispositif électronique de transmission (22) d'un flux vidéo, le dispositif électronique de transmission (22) étant propre à être embarqué dans un véhicule automobile autonome (12) et comprenant :
- un module de conversion (24) du flux vidéo en un signal vidéo (Sv) transmissible via un canal de transmission (32), et
- un module d'émission (28) configuré pour envoyer à un dispositif de surveillance (14) extérieur au véhicule (12), via le canal de transmission (32), un signal de remontée d'informations (Sr) incluant ledit signal vidéo (Sv).

Le dispositif électronique de transmission (22) comprend également un module d'horodatage (26) configuré pour produire, de manière répétée, un signal d'horodatage (Sh) comportant au moins une information relative à la date de production dudit signal d'horodatage (Sh), le signal de remontée d'informations (Sr) incluant ledit signal d'horodatage (Sh).

## Description

La présente invention concerne un dispositif électronique de transmission d'un flux vidéo, le dispositif électronique de transmission étant propre à être embarqué dans un véhicule automobile autonome et comprenant un module de conversion du flux vidéo en un signal vidéo transmissible via un canal de transmission, et un module d'émission configuré pour envoyer à un dispositif de surveillance extérieur au véhicule, via le canal de transmission, un signal de remontée d'informations incluant ledit signal vidéo.

L'invention concerne le domaine des véhicules automobiles autonomes, en particulier des véhicules automobiles autonomes ayant un niveau d'automatisation (de l'anglais *level of automation*) supérieur ou égal à 3 selon le barème de l'Organisation Internationale des Constructeurs Automobiles (OICA).

En particulier, l'invention concerne la remontée d'un flux vidéo d'un tel véhicule automobile autonome vers un dispositif de surveillance extérieur permettant la surveillance et le contrôle de ce véhicule automobile autonome.

Des dispositifs de transmission d'un flux vidéo du type précité sont connus. Ils permettent de transmettre des images filmées par une caméra embarquée dans le véhicule à un opérateur du dispositif de surveillance qui a ainsi accès à une vision partielle de l'environnement du véhicule contrôlé par le dispositif de surveillance. Cela est particulièrement utile en cas d'obstacle rencontré par le véhicule et nécessitant une intervention à distance de l'opérateur afin de permettre le contournement de l'obstacle par le véhicule.

Cependant, il existe un retard entre l'envoi du flux vidéo par le véhicule et la réception du flux vidéo par le dispositif de surveillance du fait de la latence du réseau de communication. Ce retard de transmission des informations est problématique pour le contrôle du véhicule lorsqu'il devient trop important car il existe alors un décalage temporel important entre la réalité et la perception qu'en a l'opérateur.

Il est connu d'afficher l'heure d'envoi sur les images du flux vidéo afin d'avoir une estimation du retard de transmission au niveau du dispositif de surveillance.

Toutefois, un tel affichage ne permet pas une détermination précise du retard de transmission du flux vidéo et ne permet donc pas d'assurer une sécurité suffisante pour le contrôle à distance du véhicule.

Un objectif de l'invention est ainsi de fournir un dispositif électronique de transmission d'un flux vidéo permettant une détermination précise de la latence du réseau et d'améliorer la sécurité des passagers du véhicule automobile autonome.

A cet effet, l'invention a pour objet un dispositif électronique de transmission d'un flux vidéo du type précité, dans lequel le dispositif électronique de transmission comprend également un module d'horodatage configuré pour produire, de manière répétée, un signal d'horodatage comportant au moins une information relative à la date de production dudit signal d'horodatage, le signal de remontée d'informations incluant ledit signal d'horodatage.

Selon des modes de réalisation particuliers de l'invention, le dispositif électronique de transmission présente également une ou plusieurs des caractéristiques suivantes, prise(s) isolément ou suivant toute(s) combinaison(s) techniquement possible(s) :
- le module d'émission comprend un multiplexeur configuré pour recevoir le signal vidéo et le signal d'horodatage et pour produire un signal multiplexé intégrant le signal vidéo et le signal d'horodatage, ledit signal multiplexé constituant le signal de remontée d'informations ;
- le module d'émission est propre à communiquer avec le dispositif de surveillance extérieur selon le protocole RTP ;
- le module de conversion est configuré pour intégrer des images vides au signal vidéo, de manière synchrone avec la production du signal d'horodatage ; et
- le dispositif électronique de transmission comprend un module de collecte d'information propre à collecter au moins une information supplémentaire relative au véhicule et à produire un signal de données collectées représentatif de la ou chaque information supplémentaire, le signal de remontée d'informations incluant ledit signal de données collectées.

L'invention a également pour objet un véhicule automobile autonome comprenant un dispositif électronique de transmission d'un flux vidéo tel que défini ci-dessus et au moins une caméra reliée au module de conversion et propre à générer le flux vidéo.

L'invention a également pour objet un système de surveillance d'au moins un véhicule automobile autonome, le système de surveillance comprenant au moins un véhicule automobile autonome tel que défini ci-dessus ; et un dispositif électronique de surveillance configuré pour recevoir du dispositif électronique de transmission du ou de chaque véhicule automobile autonome le signal de remontée d'informations, le dispositif électronique de surveillance comprenant un module d'affichage configuré pour récupérer le flux vidéo à partir du signal de remontée d'informations et afficher ledit flux vidéo sur au moins un écran .

Selon des modes de réalisation particuliers de l'invention, le système de surveillance présente également une ou plusieurs des caractéristiques suivantes, prise(s) isolément ou suivant toute(s) combinaison(s) techniquement possible(s) :
- un module de calcul configuré pour calculer le délai de transmission du signal d'horodatage entre le module d'horodatage et le module de calcul ;
- le module de calcul est en outre configuré pour communiquer au module d'affichage le délai de transmission du signal d'horodatage, le module d'affichage étant configuré pour afficher ledit délai de transmission sur l'écran ; et
- le système de surveillance comprend un démultiplexeur configuré pour recevoir le signal de remontée d'informations, démultiplexer ledit signal de remontée d'informations pour en extraire le signal d'horodatage et le signal vidéo, et transmettre le signal d'horodatage au module de calcul et le signal vidéo au module d'affichage.

L'invention a également pour objet un procédé de transmission d'un flux vidéo, comprenant les étapes suivantes :
- conversion du flux vidéo en un signal vidéo transmissible via un canal de transmission,
- production, de manière répétée, d'un signal d'horodatage comportant au moins une information relative à la date de production dudit signal d'horodatage, et
- émission, via le canal de transmission, d'un signal de remontée d'informations incluant ledit signal vidéo et ledit signal d'horodatage.

Selon des modes de réalisation particuliers de l'invention, le procédé de transmission présente également une ou plusieurs des caractéristiques suivantes, prise(s) isolément ou suivant toute(s) combinaison(s) techniquement possible(s) :
- la conversion du flux vidéo en signal vidéo comprend l'intégration d'images vides dans le signal vidéo, de manière synchrone avec la production du signal d'horodatage ;
- le flux vidéo est produit par une caméra embarquée dans un véhicule automobile autonome, le signal de remontée d'informations étant émis à destination d'un dispositif de surveillance extérieur audit véhicule automobile autonome ; et
- les étapes de conversion, production et émission sont mises en œuvre à bord du véhicule automobile autonome.

L'invention a également pour objet un programme d'ordinateur comportant des instructions logicielles qui, lorsqu'elles sont exécutées par un ordinateur, mettent en œuvre un procédé de transmission tel que défini ci-dessus.

L'invention sera mieux comprise à la lecture de la description qui va suivre, donnée uniquement à titre d'exemple et faite en se référant aux figures annexées parmi lesquelles :
[Fig 1] la figure 1 est une vue schématique d'un système de surveillance comprenant un véhicule automobile autonome selon l'invention et un dispositif de surveillance extérieur au véhicule,
[Fig 2] la figure 2 est un diagramme en blocs illustrant un procédé de transmission mis en œuvre par un dispositif électronique de transmission du système de surveillance de la figure 1, et
[Fig 3] la figure 3 est un diagramme en blocs illustrant un procédé de surveillance mis en œuvre par un dispositif de surveillance du système de surveillance de la figure 1.

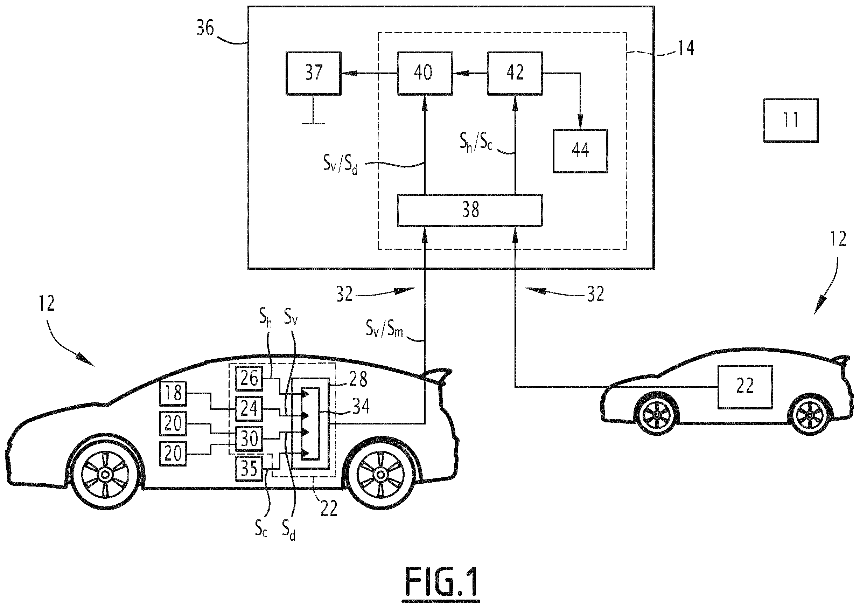

Un système de surveillance 10 est représenté sur la figure 1.

Le système de surveillance 10 comprend un serveur de référence 11, une flotte d'au moins un véhicule 12, et un dispositif électronique de surveillance 14.

Le système de surveillance 10 est propre à surveiller et à contrôler chaque véhicule 12.

Le serveur de référence 11 est propre à fournir une heure de référence pour l'ensemble des systèmes informatiques d'un réseau relié au serveur de référence 11 et permettant à tous ces systèmes de synchroniser leur horloge local avec l'heure de référence.

A cet effet, le serveur de référence 11 met avantageusement en œuvre le protocole NTP (pour « Network Time Protocol » en anglais ou « Protocole d'Heure Réseau »).

Le protocole NTP permet de synchroniser l'horloge local des systèmes du réseau avec celle du serveur de référence 11.

Le protocole NTP, bien connu de l'homme du métier, est par exemple défini par la RFC 1305 pour la version 3 du protocole NTP ou par la RFC 5905 pour la version 4 du protocole NTP.

Chaque véhicule 12 est par exemple un véhicule automobile, en particulier un autobus ou un autocar, configuré pour se déplacer sur une route. Le véhicule 12 comprend, de manière connue, des roues arrière, des roues avant, un moteur relié mécaniquement via une chaîne de transmission aux roues arrière et/ou avant pour l'entraînement desdites roues en rotation autour de leur axe, un système de direction, adapté pour agir sur les roues avant et/ou arrières du véhicule 12 de manière à modifier l'orientation de sa trajectoire, et un système de freinage, adapté pour exercer une force de freinage sur les roues du véhicule 12.

Le véhicule 12 est typiquement constitué par un véhicule à traction et/ou propulsion électrique. A cet effet, le moteur est constitué par un moteur électrique, et le véhicule 12 comprend une batterie électrique raccordée électriquement au moteur pour l'alimentation du moteur en électricité.

Le véhicule 12 est un véhicule automobile autonome. A cet effet, le véhicule comprend au moins une caméra 18 apte à produire un flux vidéo et avantageusement des capteurs 20 additionnels. Chaque capteur 20 est par exemple une caméra infrarouge, un radar, un LIDAR, un capteur de température, un capteur de pression et/ou un capteur d'humidité.

Le véhicule 12 comprend en outre un dispositif électronique de conduite autonome adapté pour piloter le véhicule 12 de manière autonome en recevant des informations sur l'environnement du véhicule 12 par l'intermédiaire de la caméra 18 et des capteurs 20 et en agissant sur le moteur, le système de direction et le système de freinage, de manière à modifier la vitesse, l'accélération et la trajectoire du véhicule 12 en réaction aux informations reçues.

Le véhicule 12 automobile autonome présente de préférence un niveau d'automatisation supérieur ou égal à 3 selon le barème de l'Organisation Internationale des Constructeurs Automobiles (OICA). Le niveau d'automatisation est alors égal à 3, c'est-à-dire une automatisation conditionnelle (de l'anglais *Conditional Automation*), ou égal à 4, c'est-à-dire une automatisation élevée (de l'anglais *High Automation*), ou encore égal à 5, c'est-à-dire une automatisation complète (de l'anglais *Full Automation*).

Selon le barème de l'OICA, le niveau 3 d'automatisation conditionnelle correspond à un niveau pour lequel le conducteur n'a pas besoin de surveiller en permanence la conduite dynamique, ni l'environnement de conduite, tout en devant toujours être en mesure de reprendre le contrôle du véhicule 12 automobile autonome. Selon ce niveau 3, un système de gestion de la conduite autonome, embarqué à bord du véhicule 12 automobile autonome, effectue alors la conduite longitudinale et latérale dans un cas d'utilisation défini et est apte à reconnaître ses limites de performance pour demander alors au conducteur de reprendre la conduite dynamique avec une marge de temps suffisante.

Le niveau 4 d'automatisation élevée correspond à un niveau pour lequel le conducteur n'est pas requis dans un cas d'utilisation défini. Selon ce niveau 4, le système de gestion de la conduite autonome, embarquée à bord du véhicule 12 automobile autonome, exécute alors la conduite dynamique latérale et longitudinale dans toutes les situations de ce cas d'utilisation défini.

Le niveau 5 d'automatisation complète correspond enfin à un niveau pour lequel le système de gestion de la conduite autonome, embarqué à bord du véhicule 12 automobile autonome, effectue la conduite dynamique latérale et longitudinale dans toutes les situations rencontrées par le véhicule 12 automobile autonome, pendant tout son trajet. Aucun conducteur n'est alors requis.

Comme illustré sur la figure 1, chaque véhicule 12 comprend un dispositif électronique de communication 22.

Le dispositif de communication 22 comprend un module de conversion 24, un module d'horodatage 26 et un module d'émission 28.

Chaque dispositif de communication 22 comprend en outre avantageusement un module de collecte d'information 30.

Le module de conversion 24 est propre à convertir le flux vidéo produit par la caméra 18 en un signal vidéo Sv transmissible via un canal de transmission 32.

Le canal de transmission 32 relie le véhicule 12 et le dispositif de surveillance 14.

Le canal de transmission 32 est de préférence constitué par un réseau de communication employant le protocole Internet. Ce réseau inclut typiquement des canaux de communication sans fil.

Le signal vidéo Sv est alors avantageusement constitué d'une pluralité de paquets de données informatiques.

Les paquets sont propres à être envoyés séparément. Les paquets sont numérotés afin de pouvoir reconstituer le flux vidéo d'origine.

Chaque paquet comprend un corps et un en-tête. Le corps comprend les données relatives au flux vidéo. L'en-tête comprend différentes informations additionnelles permettant d'identifier le paquet telles que le numéro du paquet, la taille du paquet, l'origine du paquet, le type de contenu du paquet etc.

Le module de conversion 24 est avantageusement propre à mettre en œuvre un protocole de communication RTP (pour « Real-Time Transport Protocol » en anglais ou « Protocole de Transport en Temps Réel » en français).

Le protocole RTP est un protocole de communication informatique permettant le transport de données soumises à des contraintes de temps réel, tels que des flux audio ou vidéo. En particulier, le protocole RTP décrit le format de paquet standard de la transmission audio ou vidéo.

Le protocole RTP, bien connu de l'homme du métier, est par exemple défini dans la RFC 3550 (pour « Request For Comments » en anglais ou « Demande De Commentaires » en français).

Le module de conversion 24 est en outre avantageusement configuré pour intégrer des images vides au signal vidéo Sv.

Une image vide correspond en particulier à un paquet comprenant un corps vide, sans aucune donnée relative au flux vidéo. Le volume de données du paquet est alors très faible.

Le module d'horodatage 26 est configuré pour produire, de manière répétée, avantageusement de manière périodique, un signal d'horodatage Sh comportant au moins une information relative à la date de production dudit signal d'horodatage Sh.

Avantageusement, le module de conversion 24 est configuré pour intégrer des images vides au signal vidéo Sv de manière synchrone avec la production du signal d'horodatage Sh.

Le module d'horodatage 26 est avantageusement connecté au serveur de référence 11, de sorte que l'horloge du module 26 soit synchronisée avec l'heure de référence.

Le module d'émission 28 est configuré pour envoyer au dispositif de surveillance 14, via le canal de transmission 32, un signal de remontée d'informations Sr.

Le signal de remontée d'informations Sr inclut le signal vidéo Sv et le signal d'horodatage Sh.

Dans un mode de réalisation avantageux, le module d'émission 28 comprend un multiplexeur 34.

Le multiplexeur 34 est configuré pour recevoir le signal vidéo Sv et le signal d'horodatage Sh. Le multiplexeur 34 est en outre configuré pour produire un signal multiplexé Sm intégrant le signal vidéo Sv et le signal d'horodatage Sh. Le signal multiplexé Sm constitue alors le signal de remontée d'informations Sr.

Avantageusement, le multiplexeur 34 est propre à incorporer, dans l'en-tête des paquets relatifs aux images vides produites par le module de conversion 24, l'information relative à la date de production contenue dans le signal d'horodatage Sh.

Le signal multiplexé Sm est alors constitué de paquets dont le corps comprend les données relatives au flux vidéo et de paquets de corps vide et dont l'en-tête comprend les informations d'horodatage.

Dans un mode de réalisation avantageux, le module d'émission 28 est propre à communiquer avec le dispositif de surveillance 14 extérieur selon le protocole RTP.

Le module de collecte d'information 30 est propre à collecter au moins une information supplémentaire relative au véhicule 12. L'au moins une information supplémentaire est avantageusement produite par les capteurs 20 embarqués dans le véhicule 14.

Par exemple, chaque information est une information relative à la vitesse du véhicule 14, à l'état de charge de la batterie, à une température extérieure, à une pression extérieure ou à une humidité extérieure.

Le module de collecte d'information 30 est en outre propre à produire un signal de données collectées Sd représentatif de la ou chaque information supplémentaire.

Le multiplexeur 34 est configuré pour recevoir également le signal de données collectées Sd. Le signal de remontée d'informations Sr inclut ainsi le signal de données collectées Sd.

Avantageusement, le multiplexeur 34 est propre à incorporer, dans l'en-tête des paquets relatifs aux images vides produites par le module de conversion 24, la ou les informations supplémentaires contenues dans le signal de données collectées Sd. Optionnellement, le multiplexeur 34 est également propre à incorporer ces informations supplémentaires dans l'en-tête de paquets dont le corps comprend des données relatives au flux vidéo.

Dans un mode de réalisation avantageux, le multiplexeur 34 est propre à recevoir en outre un signal complémentaire Sc. Le signal complémentaire Sc est produit par un LIDAR 35 embarqué dans le véhicule 14. Le signal complémentaire Sc est horodaté et comprend ainsi une information relative à la date de production dudit signal complémentaire Sc. Le signal de remontée d'informations Sr inclut alors le signal complémentaire Sc.

Le module de conversion 24, le module d'horodatage 26, le module d'émission 28 et le module de collecte d'information 30 sont typiquement réalisés sous la forme de logiciels stockés dans une mémoire (non représentée) et aptes à être exécutés par un processeur (non représenté) associé à ladite mémoire, la mémoire et le processeur formant ensemble une unité de traitement d'informations incluse dans le dispositif électronique de communication 22. En variante, le module de conversion 24, le module d'horodatage 26, le module d'émission 28 et le module de collecte d'information 30 sont réalisés sous la forme d'un composant logique programmable ou sous la forme d'un circuit intégré dédié inclus dans le dispositif électronique de communication 22.

Le dispositif de surveillance 14 est disposé dans un poste de contrôle 36 distant. Le poste de contrôle 36 est situé à distance des véhicules 12 et assure le contrôle des véhicules 12 par un opérateur au moyen d'au moins un écran 37 disposé dans le poste de contrôle 36.

Comme illustré sur la figure 1, le dispositif de surveillance 14 comprend avantageusement un démultiplexeur 38, un module d'affichage 40 et un module de calcul 42.

Le démultiplexeur 38 est configuré pour recevoir le signal de remontée d'informations Sr.

Le démultiplexeur 38 est configuré pour démultiplexer le signal de remontée d'informations Sr et en extraire le signal d'horodatage Sh et le signal vidéo Sv, et avantageusement le signal de données collectées Sd et le signal complémentaire Sc.

En particulier, le démultiplexeur 38 est propre à séparer les paquets dont le corps comprend les données relatives au flux vidéo afin d'obtenir le signal vidéo Sv et les paquets de corps est vide et dont l'en-tête comprend les informations d'horodatage afin d'obtenir le signal d'horodatage Sh.

Lorsque le signal de remontée d'informations Sr comprend le signal de données collectées Sd et le signal complémentaire Sc, le démultiplexeur 38 est propre à séparer les paquets associés à chaque signal à partir des informations d'identification présentes dans l'en-tête de chaque paquet.

Le démultiplexeur 38 est configuré pour transmettre le signal vidéo Sv au module d'affichage 40 et le signal d'horodatage Sh au module de calcul 42.

Le démultiplexeur 38 est en outre configuré pour transmettre le signal de données collectées Sd au module d'affichage 40 et le signal complémentaire Sc au module de calcul 42.

Le module d'affichage 40 est configuré pour récupérer le flux vidéo à partir du signal de remontée d'informations Sr et en particulier à partir du signal vidéo Sv.

Le module d'affichage 40 est configuré pour afficher le flux vidéo sur au moins l'un des écrans 37. L'opérateur a ainsi accès aux images fournies par la caméra 18 embarquée dans le véhicule 14.

Le module d'affichage 40 est en outre configuré pour afficher les informations supplémentaires comprises dans le signal de données collectées Sd sur l'écran 37. L'opérateur a alors accès à ces informations supplémentaires

Le module de calcul 42 est configuré pour calculer le délai de transmission du signal d'horodatage Sv entre le module d'horodatage 26 et le module de calcul 42.

En particulier, le module de calcul 42 est avantageusement connecté au serveur de référence 11, de sorte que l'horloge du module 42 soit elle aussi synchronisée avec l'heure de référence.

Le module de calcul 42 est ainsi propre à déterminer le délai de transmission du signal d'horodatage Sv par différence entre l'heure de production du signal d'horodatage Sh par le module de d'horodate 26 et l'heure de réception du signal d'horodatage Sh par le module de calcul 42.

La détermination du délai de transmission du signal d'horodatage Sv permet ainsi de calculer la latence du canal de transmission 32.

Lorsque le signal de remontée d'informations Sr comprend le signal complémentaire Sc, le module de calcul 42 est configuré pour calculer le délai de transmission du signal complémentaire Sc entre le LIDAR 35 ayant généré le signal complémentaire Sc et le module de calcul 42.

Le module de calcul 42 est en outre configuré pour communiquer au module d'affichage 40 le délai de transmission du signal d'horodatage Sh et avantageusement le délai de transmission du signal complémentaire Sc.

En variante, le module de calcul 42 est configuré pour communiquer au module d'affichage 40 le maximum entre le délai de transmission du signal d'horodatage Sh et le délai de transmission signal complémentaire Sc.

Le module d'affichage 40 est alors configuré pour afficher le ou les délais de transmission sur l'écran 37. L'opérateur connait ainsi une estimation précise de la latence du canal de transmission 32 et connait le retard des images qu'il visualise sur l'écran 37 par rapport à la réalité.

Le module de calcul 42 est en outre configuré pour envoyer le ou les délai(s) de transmission à une mémoire 44 stockant le délai de transmission au cours du temps.

Optionnellement ou en variante, le module de calcul 42 est configuré pour envoyer le ou les délai(s) de transmission à au moins un automate (non représenté) pour un traitement automatique de ce ou ces délai(s) de transmission.

Le module d'affichage 40 et le module de calcul 42 sont typiquement réalisés sous la forme de logiciels stockés dans une mémoire (non représentée) et aptes à être exécutés par un processeur (non représenté) associé à ladite mémoire, la mémoire et le processeur formant ensemble une unité de traitement d'informations incluse dans le dispositif de surveillance 14. En variante, le module d'affichage 40 et le module de calcul 42 sont réalisés sous la forme d'un composant logique programmable ou sous la forme d'un circuit intégré dédié inclus dans le dispositif de surveillance 14.

Un procédé de détermination d'une latence de réseau, mis en œuvre par le système de surveillance 10, est constitué d'un premier procédé 100 de transmission d'un flux vidéo par l'un des véhicules 12 suivi d'un procédé 200 de surveillance du véhicule 12.

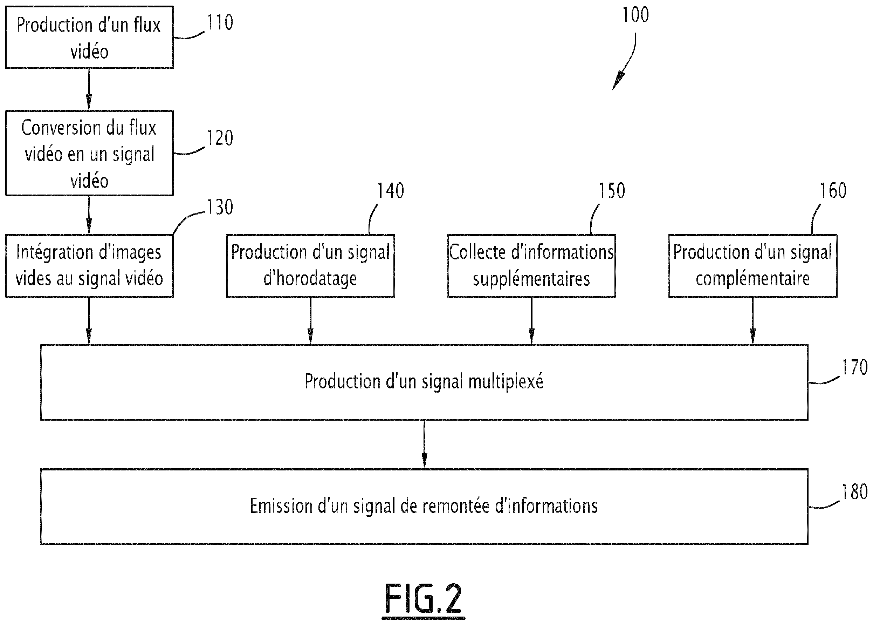

Le procédé 100 de transmission d'un flux vidéo, mis en œuvre par le dispositif électronique de transmission 22, va maintenant être décrit, en référence à la figure 2.

Ce procédé 100 comprend une première étape 110 de production d'un flux vidéo par la caméra 18 embarquée dans le véhicule automobile autonome 12.

L'étape 110 est suivie d'une étape 120 de conversion du flux vidéo en un signal vidéo Sv transmissible via le canal de transmission 32.

L'étape 120 est elle-même suivie d'une étape optionnelle 130 d'intégration d'images vides au signal vidéo Sv.

Le procédé 100 comprend une étape 140 de production, de manière répétée, d'un signal d'horodatage Sh comportant au moins une information relative à la date de production du signal d'horodatage Sh.

L'étape 140 s'effectue en parallèle des étapes 110, 120 et 130.

Avantageusement, l'intégration des images vides s'effectue de manière synchrone avec la production du signal d'horodatage Sh.

Le procédé 100 comprend en outre une étape optionnelle 150 de collecte d'au moins une information supplémentaire relative au véhicule 12 et de production d'un signal de données collectées Sd représentatif de la ou chaque information supplémentaire. L'étape 150 s'effectue en parallèle des étapes 110 à 140.

Le procédé 100 comprend en outre une étape optionnelle 160 de production d'un signal complémentaire Sc horodaté produit par un LIDAR 35 embarqué dans le véhicule 12. L'étape 160 s'effectue en parallèle des étapes 110 à 150.

Le procédé 100 comprend à la suite des étapes 130 à 160, une étape 170 optionnelle de production d'un signal multiplexé intégrant le signal vidéo Sv et le signal d'horodatage Sh, et optionnellement le signal de données collectées Sd et le signal complémentaire Sc.

L'étape 170 est elle-même suivie d'une étape 180 d'émission, via le canal de transmission 32, d'un signal de remontée d'informations Sr incluant le signal vidéo Sv et le signal d'horodatage Sh, et optionnellement le signal de données collectées Sd et le signal complémentaire Sc.

Lorsque l'étape 170 est mise en œuvre, le signal multiplexé Sm constitue le signal de remontée d'informations Sr.

Le signal de remontée d'informations Sr est émis à destination du dispositif de surveillance 14 extérieur au véhicule automobile autonome 12.

Les étapes 110 à 180 sont mises en œuvre à bord du véhicule automobile autonome 12.

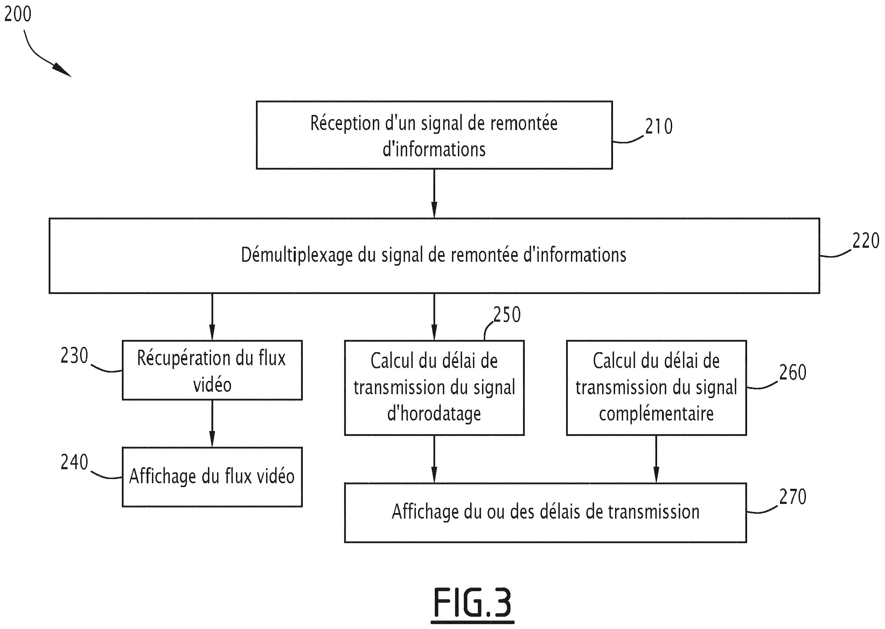

Le procédé 200 de surveillance de l'un des véhicules 12, mis en œuvre par le dispositif électronique de surveillance 14, va maintenant être décrit, en référence à la Figure 3.

Ce procédé 200 comprend une première étape 210 de réception du signal de remontée d'informations Sr envoyé par le dispositif de transmission 22.

Lorsque le signal de remontée d'informations Sr est sous forme de signal multiplexé Sm, l'étape 210 est elle-même suivie d'une étape 220 de démultiplexage du signal multiplexé Sm pour en extraire le signal d'horodatage Sh et le signal vidéo Sv, et optionnellement le signal de données collectées Sd et le signal complémentaire Sc.

Le procédé 200 comprend ensuite une étape 230 de récupération du flux vidéo à partir du signal vidéo Sv puis une étape 240 d'affichage du flux vidéo sur au moins l'un des écrans 15.

Le procédé 200 comprend une étape 250 de calcul du délai de transmission du signal d'horodatage Sh entre sa production par le dispositif de transmission 22 et sa réception par le dispositif électronique de surveillance 14. L'étape 250 s'effectue en parallèle des étapes 230 et 240.

Le procédé 200 comprend une étape optionnelle 260 de calcul du délai de transmission du signal complémentaire Sc entre sa production et sa réception par le dispositif électronique de surveillance 14. L'étape 260 s'effectue en parallèle des étapes 230, 240 et 250.

Les étapes 250 et 260 sont suivies d'une étape 270 d'affichage sur l'écran 37 du délai de transmission du signal d'horodatage Sh et optionnellement du signal complémentaire Sc ou du maximum entre les deux délais.

Grâce à l'invention décrite ci-dessus, une détermination précise de la latence du réseau est possible et permet à l'opérateur de connaitre le retard des images qu'il visualise sur l'écran 37 par rapport à la réalité de l'environnement de la voiture 12 à contrôler par l'opérateur. L'invention permet donc d'avoir une information précise et fiable sur l'état de saturation du réseau et permet de détecter un réseau détérioré. L'opérateur agit alors en conséquence afin de garantir la sécurité des passagers du véhicule automobile autonome 12.

L'invention permet en outre le calcul de la latence à vide, correspondant à la part de la latence due au seul canal de transmission 32, ce calcul n'étant pas possible avec les dispositifs connus de l'état de la technique. Il est ainsi possible d'exploiter cette connaissance de la latence à vide de manière avantageuse pour la surveillance des véhicules de la flotte.

## Revendications

1. Dispositif électronique de transmission (22) d'un flux vidéo, le dispositif électronique de transmission (22) étant propre à être embarqué dans un véhicule automobile autonome (12) et comprenant :
- un module de conversion (24) du flux vidéo en un signal vidéo (Sv) transmissible via un canal de transmission (32), et
- un module d'émission (28) configuré pour envoyer à un dispositif de surveillance (14) extérieur au véhicule (12), via le canal de transmission (32), un signal de remontée d'informations (Sr) incluant ledit signal vidéo (Sv) ;
**caractérisé en ce que** le dispositif électronique de transmission (22) comprend également un module d'horodatage (26) configuré pour produire, de manière répétée, un signal d'horodatage (Sh) comportant au moins une information relative à la date de production dudit signal d'horodatage (Sh), le signal de remontée d'informations (Sr) incluant ledit signal d'horodatage (Sh).

2. Dispositif électronique de transmission (22) selon la revendication 1, dans lequel le module d'émission (28) comprend un multiplexeur (34) configuré pour recevoir le signal vidéo (Sv) et le signal d'horodatage (Sh) et pour produire un signal multiplexé (Sm) intégrant le signal vidéo (Sv) et le signal d'horodatage (Sh), ledit signal multiplexé (Sm) constituant le signal de remontée d'informations (Sr).

3. Dispositif électronique de transmission (22) selon la revendication 1 ou 2, dans lequel le module d'émission (28) est propre à communiquer avec le dispositif de surveillance (14) extérieur selon le protocole RTP.

4. Dispositif électronique de transmission (22) selon l'une quelconque des revendications précédentes, dans lequel le module de conversion (24) est configuré pour intégrer des images vides au signal vidéo (Sv), de manière synchrone avec la production du signal d'horodatage (Sh).

5. Dispositif électronique de transmission (22) selon l'une quelconque des revendications précédentes, comprenant un module de collecte d'information (30) propre à collecter au moins une information supplémentaire relative au véhicule (12) et à produire un signal de données collectées (Sd) représentatif de la ou chaque information supplémentaire, le signal de remontée d'informations (Sr) incluant ledit signal de données collectées (Sd).

6. Véhicule automobile autonome (12) comprenant :
- un dispositif électronique de transmission (22) d'un flux vidéo selon l'une quelconque des revendications précédentes ; et
- au moins une caméra (18) reliée au module de conversion (24) et propre à générer le flux vidéo.

7. Système de surveillance (10) d'au moins un véhicule automobile autonome (12), le système (10) comprenant :
- au moins un véhicule automobile autonome (12) selon la revendication 6 ; et
- un dispositif électronique de surveillance (14) configuré pour recevoir du dispositif électronique de transmission (22) du ou de chaque véhicule automobile autonome (12) le signal de remontée d'informations (Sr), le dispositif électronique de surveillance (14) comprenant un module d'affichage (40) configuré pour récupérer le flux vidéo à partir du signal de remontée d'informations (Sr) et afficher ledit flux vidéo sur au moins un écran (37).

8. Système de surveillance (10) selon la revendication 7, dans lequel le dispositif électronique de surveillance comprend un module de calcul (42) configuré pour calculer le délai de transmission du signal d'horodatage (Sh) entre le module d'horodatage (26) et le module de calcul (42).

9. Système de surveillance (10) selon la revendication 8, dans lequel le module de calcul (42) est en outre configuré pour communiquer au module d'affichage (40) le délai de transmission du signal d'horodatage (Sh), le module d'affichage (40) étant configuré pour afficher ledit délai de transmission sur l'écran (37).

10. Système de surveillance (10) selon l'une quelconque des revendications 7 à 9, dans lequel le dispositif électronique de transmission (22) présente les caractéristiques de la revendication 2, et le dispositif électronique de surveillance (14) comprend un démultiplexeur (38) configuré pour recevoir le signal de remontée d'informations (Sr), démultiplexer ledit signal de remontée d'informations (Sr) pour en extraire le signal d'horodatage (Sh) et le signal vidéo (Sv), et transmettre le signal d'horodatage (Sh) au module de calcul (42) et le signal vidéo (Sv) au module d'affichage (40).

11. Procédé de transmission d'un flux vidéo, comprenant les étapes suivantes :
- conversion du flux vidéo en un signal vidéo (Sv) transmissible via un canal de transmission (32),
- production, de manière répétée, d'un signal d'horodatage (Sh) comportant au moins une information relative à la date de production dudit signal d'horodatage (Sh), et
- émission, via le canal de transmission (32), d'un signal de remontée d'informations (Sr) incluant ledit signal vidéo (Sv) et ledit signal d'horodatage (Sh).

12. Procédé de transmission selon la revendication 11, dans lequel la conversion du flux vidéo en signal vidéo (Sv) comprend l'intégration d'images vides dans le signal vidéo (Sv), de manière synchrone avec la production du signal d'horodatage (Sh).

13. Procédé de transmission selon la revendication 11 ou 12, dans lequel le flux vidéo est produit par une caméra (18) embarquée dans un véhicule automobile autonome (12), le signal de remontée d'informations (Sr) étant émis à destination d'un dispositif de surveillance (14) extérieur audit véhicule automobile autonome (12).

14. Procédé de transmission selon la revendication 13, dans lequel les étapes de conversion, production et émission sont mises en œuvre à bord du véhicule automobile autonome (12).

15. Programme d'ordinateur comportant des instructions logicielles qui, lorsqu'elles sont exécutées par un ordinateur, mettent en œuvre un procédé de transmission selon l'une des revendications 11 à 14.
